# EUROPÄISCHE PATENTANMELDUNG

(11) **EP 1 901 036 A2**
(43) Veröffentlichungstag der Anmeldung: **19.03.2008**
(21) Anmeldenummer: 07116322.4
(22) Anmeldetag: 13.09.2007
(51) Int. Cl.: G01C 21/26, G01C 21/36

(54) **Navigationssystem für ein Fahrzeug**

(30) Priorität: 18.09.2006 DE 102006043698
(71) Anmelder: VDO Automotive AG, 93055 Regensburg (DE)
(72) Erfinder: Reitmeier, Willibald, 93155, Hohenschambach (DE)

(57) **Zusammenfassung**

Navigationssystem (NAV) für ein Fahrzeug mit einer Einrichtung (PD) zur Bestimmung der momentanen Position (P) des Fahrzeugs, mindestens einer Schnittstelle (IF) zu mindestens einem Übertragungskanal (TC) für Informationen (Inf), einer Einrichtung (RD) zur Erkennung und / oder Auswertung von über einen Übertragungskanal empfangenen Informationen mit Bezug zu der momentanen Position des Fahrzeugs, einer Einrichtung (ED) zur Extraktion von Zielinformationen (TI) aus solchen empfangenen Informationen und einer Einrichtung (DU) zur Übernahme solcher Zielinformationen (TI) in das Zielführungssystem (TS) des Navigationssystems.

## Beschreibung

Navigationssysteme sind in Kraftfahrzeugen, insbesondere in Straßenfahrzeugen, seit Jahren allgemein üblich. Für den Benutzer eines derartigen Navigationssystems sind die Einfachheit und der Komfort der Bedienung dieses Systems ein ausschlaggebendes Kaufkriterium. Dies gilt umso mehr, als die Sicherheit des Fahrers und der Fahrzeuginsassen entscheidend von der Einfachheit der Bedienung abhängt. Denn jede Ablenkung des Fahrzeugführers bedeutet ein besonderes Risiko für die Sicherheit.

Der vorliegenden Erfindung liegt deshalb die Aufgabe zugrunde, ein Navigationssystem anzugeben, das den Fahrer bei seiner eigentlichen Aufgabe, das Fahrzeug sicher zu führen, wirkungsvoll unterstützt. Diese Aufgabe wird durch ein Navigationssystem mit Merkmalen nach einem der Patentansprüche gelöst.

Vorteilhafte Weiterbildungen der Erfindung sind Gegenstand untergeordneter Patentansprüche.

Im Folgenden wird die Erfindung anhand bevorzugter Ausführungsbeispiele und mit Hilfe von Figuren näher beschrieben.

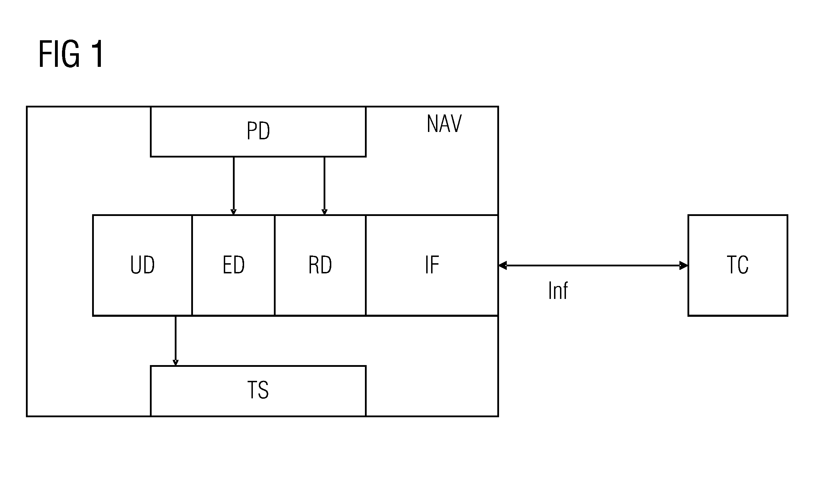

Figur 1 zeigt in schematischer Weise ein erfindungsgemäßes Navigationssystem.

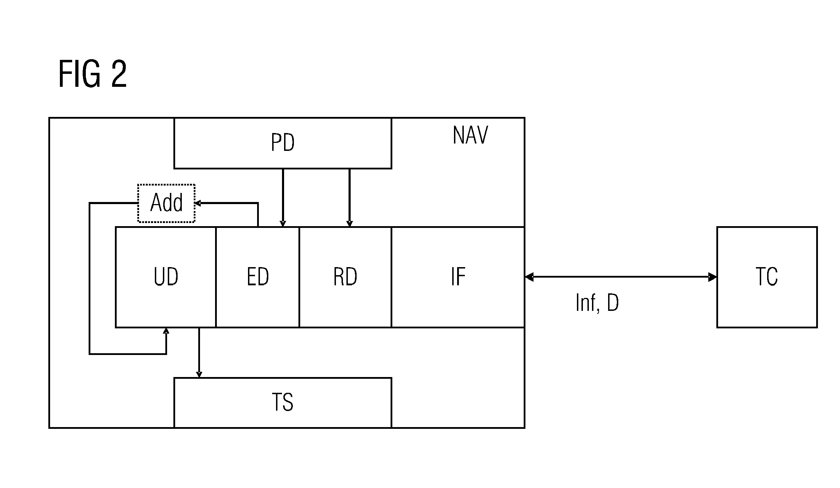

Figur 2 zeigt in schematischer Weise vorteilhafte Weiterbildungen eines erfindungsgemäßen Navigationssystems.

Das erfindungsgemäße Navigationssystem (NAV) für ein Fahrzeug ist mit einer Einrichtung (PD) zur Bestimmung der momentanen Position (P) des Fahrzeugs ausgestattet, sowie mindestens einer Schnittstelle (IF) zumindest eines Übertragungskanals (TC) für Informationen (Inf). Ferner ist dieses Navigationssystem mit einer Einrichtung (RD) zur Erkennung und/oder Auswertung von Informationen ausgestattet, die über einen Übertragungskanal (TC) empfangen werden, und einen Bezug zu der momentanen Position (P) des Fahrzeugs haben. Außerdem verfügt das erfindungsgemäße Navigationssystem über eine Einrichtung (ED) zur Extraktion von Zielinformationen (TI) aus solchen empfangenen Informationen und über eine Einrichtung (UD) zur Übernahme solcher Zielinformationen in das Zielführungssystem (TS) des Navigationssystems.

Gemäß einer vorteilhaften Weiterbildung der Erfindung ist das Navigationssystem mit einer Einrichtung zur Ermittlung einer Adresse aus einer solchen empfangenen Information ausgestattet.

Eine derartige Adresse kann gemäß einer weiteren Ausführungsform oder Weiterbildung der Erfindung dazu verwendet werden, mit Hilfe einer entsprechenden Einrichtung des Navigationssystems eine Nachricht an diese Adresse zu senden.

Besonders vorteilhaft ist es schließlich, wenn das erfindungsgemäße Navigationssystem mit einer Mehrzahl von Eingabe- und Ausgabegeräten derart verbunden ist, dass seine Benutzer die Eingabe und das Entgegennehmen von - auch multimedialen - Daten oder Informationen unterschiedlicher Art an das bzw. von dem Navigationssystem oder an einen bzw. aus einem mit dem Navigationssystem verbundenen Übertragungskanal mit Hilfe dieser Eingabe- und Ausgabegeräte ermöglicht wird.

Das erfindungsgemäße Navigationssystem leistet somit im Vergleich zu herkömmlichen Navigationssystemen einen größeren Beitrag zur komfortablen Informationsversorgung des Fahrers und ist - beispielsweise - nicht auf eine im Display dargestellte Landkarte beschränkt. Es verarbeitet vorzugsweise Verkehrsinformationen verschiedenster Art und kann daraus Ausweichrouten ableiten oder berechnen. Zu den über einen Übertragungskanal empfangenen Informationen gehören diverse "Führer", die zum Beispiel Hotels, Tankstellen oder ähnliche Einrichtungen anzeigen oder auf diese hinweisen, welche an der Route liegen. Über das erfindungsgemäße Navigationssystem können ferner Notrufe unter Nutzung der Kenntnis der momentanen Fahrzeugposition abgesetzt werden. Vorzugsweise verfügt das erfindungsgemäße Navigationssystem auch über eine TV-Funktion.

Eine besonders vorteilhafte Ausführungsform des erfindungsgemäßen Navigationsgerätes ist ein multimediales Zentralgerät oder auch eine dezentrale Konfiguration mehrerer geeigneter Geräte. Das Gerät kann so als interaktiver Reiseführer dienen. Beispielsweise im Stil eines klassischen Hörbuchs können Reiseinformationen zur Umgebung - in Abhängigkeit vom aktuellen Standort des Fahrzeugs - erzählt werden. In einer anderen multimedialen Variante können Fahrer (sofern Gesetzeslage dies erlaubt) und Mitfahrer über individuelle, akustische und visuelle Ausgabegeräte (zum Beispiel Display-Anzeige, Head-Up-Display-Brillen) informiert werden. Ergänzt wird dieses System noch durch eine interaktive Bedienmöglichkeit, zum Beispiel über eine Menü-Auswahl zu den Schwerpunkten.

Gemäß einer Weiterbildung der Erfindung kann durch geeignete Vernetzung verschiedener Transportmittel (Krad, Lkw, Pkw, usw.) zwischen den Transportmitteln Informationen ausgetauscht werden (zum Beispiel kommunikativer Art, Unfallmeldungen, Staumeldungen, Notrufe, Pannen, Spiele, etc.). In Ergänzung dieser Methodik kann auch das Navigationssystem, das ja als zentrales multimediales und kommunikatives Gerät anzusehen ist, auch Daten, die über Funknetze (Radio, TV-Frequenzen, Mobilfunk, Funk, etc.) verarbeiten, also empfangen und/oder senden.

Eine Besonderheit könnten dabei auch regionale oder zentrale Werbeplattformen sein, zum Beispiel in Form von Sendestationen, vorzugsweise an belebten Straßen oder Städten. Auf diese Weise ist die interaktive Übertragung weiterer, aktueller Informationen (zum Beispiel gezielt auch regional) auf das multimediale Navigationsgerät denkbar. Hierdurch können zum Beispiel bei einem Reiseführer die Basisdaten durch aktuelle Daten (zum Beispiel Veranstaltungshinweise) erweitert und aktualisiert werden.

In Interaktionen kann das erfindungsgemäße Navigationssystem aber auch im Fahrzeug entstehende Daten oder eigene Fahrzeugdaten (zum Beispiel den Standort des Fahrzeugs, die Besetzung des Fahrzeugs, die errechnete Ankunftszeit, Mautgebühren, terminliche Updates im Organizer, Buchungen für Werkstätten, Hotels, Tankstellen, oder den Gesundheitszustand der Insassen) an Personen, Institutionen außerhalb des Fortbewegungsmittels übertragen.

Zur Umsetzung dieser Zusatzleistungen sollte das multimediale Navigationssystem über erweiterte Strukturen verfügen. Anschlussmöglichkeiten an verschiedene Netze/Peripheriegeräte über grundsätzlich bekannte Schnittstellen wären beispielsweise: Radio, TV-Frequenzen, Mobilfunk (zum Beispiel GSM, UMTS), Funk, regionale Funknetze, akustisch, Ultraschall, Radar, optische Datenübertragung (zum Beispiel Laser, Irda, etc.), PC-Netze (zum Beispiel W-LAN) oder ein Fahrzeugnetz (zum Beispiel CAN).

Alle diese Schnittstellen kann das multimediale Navigationsgerät selbst anbieten oder über geeignete Schnittstellen mit entsprechend externen Geräten verbunden werden.

Als Ausgabegeräte oder Kanäle kommen insbesondere in Betracht: ein akustischer Kanal (zum Beispiel Lautsprecher, Headset), ein optischer Kanal (zum Beispiel Display, Head-Up), haptische Kanäle wie zum Beispiel Federkennlinientaster, Pedale, Sitzverstellung, Vibration am/im Sitz), sonstige Sinne des Körpers (zum Beispiel Wärmeempfinden, Tastsinn), direkte für Körper und Gehirn nutzbare Inputs (zum Beispiel Gehirnstrompulse), eine Schnittstelle zum Fahrzeug (zum Beispiel CAN), eine Schnittstelle zu anderen im Kfz verwendeten Geräten (zum Beispiel Mobiltelefon, PC, etc.), Laufwerke (zum Beispiel DVD).

Alle diese Schnittstellen kann das multimediale Navigationsgerät selbst anbieten oder über geeignete Schnittstellen mit entsprechend externen Geräten verbunden werden.

Als Eingabegeräte, insbesondere in Betracht:
- akustische Eingabegeräte (wie zum Beispiel ein Mikrofon oder Headset)
- optische Eingabegeräte (wie zum Beispiel ein Kamerasystem, das die Körperbewegung oder die Gestik aufnimmt),
- haptische Eingabegeräte (wie zum Beispiel ein Taster oder Pedale),
- sonstige veränderliche Parameter des Körpers aufnehmende Sensoren (wie zum Beispiel die Temperatur, Blutzuckerwerte),
- direkte vom Körper und Gehirn genutzte Signale (zum Beispiel Gehirnstrompulse),
- Schnittstelle zum Kfz (zum Beispiel CAN),
- Schnittstelle zu anderen im Kfz verwendeten Geräten (zum Beispiel Mobiltelefon, PC, etc.) oder
- Laufwerke (zum Beispiel DVD).

Alle diese Schnittstellen kann das multimediale Navigationsgerät selbst anbieten oder über geeignete Schnittstellen mit entsprechend externen Geräten verbunden werden.

Als Fahrzeuge oder Fortbewegungsmittel im Sinne der Erfindung kommen insbesondere das Krad, der Lkw oder Fußgänger, Fahrräder, Flugzeuge in Betracht, aber auch Schiffe, d.h. schwimmfähige Fortbewegungsmittel aller Art.

## Patentansprüche

1. Navigationssystem (NAV) für ein Fahrzeug mit
a) einer Einrichtung (PD) zur Bestimmung der momentanen Position (P) des Fahrzeugs
b) mindestens einer Schnittstelle (IF) zu mindestens einem Übertragungskanal (TC) für Informationen (Inf)
c) einer Einrichtung (RD) zur Erkennung und / oder Auswertung von über einen Übertragungskanal (TC) empfangenen Informationen (Inf) mit Bezug zu der momentanen Position (P) des Fahrzeugs
d) einer Einrichtung (ED) zur Extraktion von Zielinformationen (TI) aus solchen empfangenen Informationen (INF) und
e) einer Einrichtung (UD) zur Übernahme solcher Zielinformationen (TI) in das Zielführungssystem (TS) des Navigationssystems.

2. Navigationssystem nach Anspruch 1 mit einer Einrichtung (AAD) zur Ermittlung einer Adresse (Add) zu einer solchen empfangenen Information (Inf).

3. Navigationssystem nach einem der vorhergehenden Ansprüche mit einer Einrichtung (TD) zum Senden einer Nachricht (Mes) an eine Adresse (Add) zu einer solchen empfangenen Information (Inf).

4. Navigationssystem nach einem der vorhergehenden Ansprüche, das mit einer Mehrzahl von Eingabe- und Ausgabegeräten (IOD) derart verbunden ist, dass seinem Benutzer die Eingabe und das Entgegennehmen von - auch multimedialen - Daten (D) oder Informationen (Inf) unterschiedlicher Art an das bzw von dem Navigationssystem oder an einen bzw aus einem mit dem Navigationssystem verbundenen Übertragungskanal (TC) mit Hilfe dieser Eingabe- und Ausgabegeräte ermöglicht wird.
